# EUROPÄISCHE PATENTSCHRIFT

(11) **EP 3 567 167 B1**
(45) Veröffentlichungstag und Bekanntmachung des Hinweises auf die Patenterteilung: **05.01.2022**
(21) Anmeldenummer: 19171157.1
(22) Anmeldetag: 25.04.2019
(51) Int. Cl.: E02F 9/20, B60P 1/00, E02F 9/22, F04B 49/00, F15B 15/00, F15B 11/16, F15B 21/08, B62D 49/00

(54) **HYDRAULISCHE STEUERANORDNUNG FÜR EINE ANORDNUNG MOBILER ARBEITSMASCHINEN UND ANORDNUNG MOBILER ARBEITSMASCHINEN**
HYDRAULIC CONTROL SYSTEM FOR AN ASSEMBLY OF MOBILE WORKING MACHINES AND ASSEMBLY OF MOBILE WORKING MACHINES
DISPOSITIF DE COMMANDE HYDRAULIQUE POUR UN ENSEMBLE DE MACHINES DE TRAVAIL MOBILES ET ENSEMBLE DE MACHINES DE TRAVAIL MOBILES

(30) Priorität: 08.05.2018 DE 102018207158
(43) Veröffentlichungstag der Anmeldung: 13.11.2019
(73) Patentinhaber: Robert Bosch GmbH, 70442 Stuttgart (DE)
(72) Erfinder: Schmuttermair, Peter, 86459 Gessertshausen (DE); Lenzgeiger, Ulrich, 86424 Dinkelscherben (DE); Maier, Uwe, 71679 Asperg (DE)

(56) Entgegenhaltungen:
- EP-A1- 3 006 245
- DE-A1- 2 900 866
- DE-A1-102005 059 240
- DE-B3-102014 103 932

## Beschreibung

Die Erfindung betrifft eine hydraulische Steueranordnung für eine Anordnung mobiler Arbeitsmaschinen gemäß dem Oberbegriff des Patentanspruchs 1, sowie eine Anordnung mobiler Arbeitsmaschinen mit der Steueranordnung gemäß Patentanspruch 13.

Eine Anordnung mobiler Arbeitsmaschinen weist wenigstens zwei mobile Arbeitsmaschinen auf. In der Regel ist eine davon eine Zugmaschine, beispielsweise ein Traktor, und eine andere eine gezogene Arbeitsmaschine, beispielsweise ein Erntewagen. Beide Arbeitsmaschinen weisen wenigstens einen hydraulischen Verbraucher, beispielsweise einen Hydromotor oder einen Hydrozylinder auf, der mit Druckmittel zu versorgen ist. Hierzu ist eine Hydropumpe oder Hydropumpeneinheit auf der als Zugmaschine ausgebildeten Arbeitsmaschine angeordnet und versorgt die Verbraucher der Zugmaschine. Über eine hydraulische Schnittstelle, die auch als "Power-Beyond" bekannt ist, können auch die Verbraucher der gezogenen Arbeitsmaschine versorgt werden.

Um das Druckmittel bedarfsgerecht, das heißt insbesondere am Lastdruck der Verbraucher orientiert, bereitzustellen sind derartige Anordnungen zumeist mit Load-Sensing-Systemen für die Arbeitshydraulik ausgerüstet. Bei solchen Systemen wird der höchste der Lastdrücke der verschiedenen Verbraucher über eine hydraulische Auswahleinrichtung, beispielsweise eine Wechselventilkaskade, ermittelt und zur Hydropumpe gemeldet. Ein Pumpenregler regelt dann in Abhängigkeit des höchsten Lastdruckes den von der Hydropumpe bereitgestellten Pumpendruck auf einen Wert, der gleich dem höchsten Lastdruck plus einem Differenzdruck ist. Auf diese Weise steht die notwendige Druckdifferenz zur Verfügung, die es ermöglicht, dass über Steuerventile die Verbraucher mit ausreichend Druckmittel versorgbar sind und die Strömungsverluste der Hydraulikleitungen überwunden werden können.

Herkömmlich wird der Differenzdruck am Pumpenregler auf einen Wert zwischen 20 und 40 bar fest eingestellt. Einfluss auf die Höhe des eingestellten Wertes nehmen dabei die Leitungsquerschnitte, deren Länge und die bestimmungsgemäßen Druckmittelvolumenströme der Verbraucher, da von ihnen die Strömungsverluste abhängen.

Eine grundlegende Schrift zur Load-Sensing-Regelung einer Hydropumpe für ein hydrostatisches Antriebssystem zeigt die Offenlegungsschrift DE 10 2005 059 240 A1. Darin wird der Lastdruck elektronisch erfasst und an eine elektronische Steuereinrichtung gemeldet. Auf diese Weise können lange hydraulische Lastmeldeleitungen hin zum Regler der Hydropumpe vermieden werden. Diese haben beispielsweise die Problematik, dass das über sie gemeldete hydraulische Lastdrucksignal aufgrund einer zwar kleinen aber dennoch vorhandenen Kompressibilität des Druckmittels und einer Elastizität der Leitungen schwingungsfähig sein kann. Das erschwert die prozesssichere Lastmeldung an die Hydropumpe und kann das Regelverhalten des Pumpenreglers nachteilig beeinflussen. Durch die Verwendung der elektronischen Lastmeldung und Verarbeitung kann diesen Problematiken entgegengewirkt werden. Des Weiteren ermöglicht die elektronische Verarbeitung des gemeldeten Lastdrucks dessen Modifizierung oder Verfälschung, um die Pumpe wunschgemäß zu regeln.

Die Anwendung einer elektronischen Lastmeldung, Weiterverarbeitung und Modifizierung des ursprünglich hydraulischen Lastdrucksignals zeigt die Druckschrift DE 10 2014 103 932 B3. Hierbei ist eine Steuereinrichtung auf der gezogenen Arbeitsmaschine angeordnet, die für eine Differenz aus Pumpendruck und höchstem Lastdruck der Verbraucher dieser Arbeitsmaschine elektronisch verarbeitet und elektronisch an einen hydraulischen Pumpenregler meldet. In Abhängigkeit des elektronischen Signals erfolgt mittels dem Pumpenregler dann die hydraulische Ansteuerung eines hydraulischen Stellelementes der verstellbaren Hydropumpe. Um die hydraulischen Leitungen zur Lastmeldung vergleichsweise kurz zu halten und die oben genannten Effekt zu begrenzen, erfolgt dabei die elektronische Erfassung des Lastdrucks der Verbraucher der gezogenen Arbeitsmaschine im Bereich dieser Arbeitsmaschine.

Nachteilig an dieser Lösung ist, dass bei Verwendung verschiedener oder mehrerer gezogener Arbeitsmaschinen der Vorteil der elektronischen Verarbeitung des Lastdrucksignals nur dann gegeben ist, wenn jede der gezogenen Arbeitsmaschinen derart mit einer Steuereinrichtung ausgerüstet ist. Dies stellt einen erheblichen vorrichtungstechnischen Aufwand dar, sodass ein Hemmnis besteht, gezogene Arbeitsmaschinen zur elektronischen Erfassung des Lastdrucks auszurüsten.

Dem gegenüber liegt der Erfindung die Aufgabe zugrunde, eine Steueranordnung für hydraulisch koppelbare Arbeitsmaschinen zu schaffen, die bei elektronischer Lastdruckerfassung mit nur geringem vorrichtungstechnischem Aufwand unterschiedlichste Kombinationen von Arbeitsmaschinen ermöglicht. Eine weitere Aufgabe besteht darin, eine Anordnung hydraulisch koppelbarer Arbeitsmaschinen zu schaffen, die bei elektronischer Lastdruckerfassung mit nur geringem vorrichtungstechnischem Aufwand unterschiedlichste Kombinationen von Arbeitsmaschinen ermöglicht.

Die erste Aufgabe wird gelöst durch eine Steueranordnung mit den Merkmalen des Patentanspruchs 1, die zweite durch eine Anordnung hydraulisch koppelbarer mobiler Arbeitsmaschinen mit den Merkmalen des Anspruchs 13. Vorteilhafte Weiterbildungen der Steueranordnung sind in den Patentansprüchen 2 bis 12, diejenigen der Anordnung hydraulisch koppelbarer mobiler Arbeitsmaschinen im Patentanspruch 14 beschrieben.

Eine hydraulische Steueranordnung für eine Anordnung hydraulisch koppelbarer Arbeitsmaschinen hat eine Schnittstelle zur hydraulischen Kopplung der Arbeitsmaschinen. Diese Schnittstelle weist insbesondere einen Druck- oder Zulaufanschluss, einen Niederdruck- oder Rücklaufanschluss und einen Lastmeldeanschluss auf und ist auch unter der Bezeichnung "Power Beyond" bekannt. Zur bedarfsgerechten Druckmittelversorgung des oder der hydraulischen Verbraucher der Arbeitsmaschinen hat die Steueranordnung eine Hydromaschine, insbesondere Hydropumpe. Diese ist bevorzugt als eine in ihrem Fördervolumen verstellbare Pumpe ausgebildet. Des Weiteren hat die Steueranordnung ein elektronisches Steuergerät, über das in Abhängigkeit einer Last des Verbrauchers ein elektronisches Steuersignal erzeugbar ist. Die Last ist insbesondere ein Lastdruck. Insbesondere entspricht das elektronische Steuersignal einer Summe aus dem insbesondere höchsten Lastdruck und einem im Steuergerät als konstant oder als variabel abgelegten Differenzdruck. Das elektronische Steuersignal ist von einem, insbesondere elektrohydraulischen, Wandler der Steueranordnung in ein hydraulisches Steuersignal wandelbar, in Abhängigkeit dessen die Hydromaschine zur bereits erwähnten, bedarfsgerechten Druckmittelversorgung ansteuerbar ist. Vorzugsweise ist der Wandler vom Steuergerät mit dem elektronischen Steuersignal ansteuerbar oder angesteuert. Erfindungsgemäß sind der Wandler und die Hydromaschine derart verbindbar oder verbunden, dass sie auf derselben Arbeitsmaschine anordenbar sind.

Selbst für eine Vielzahl koppelbarer Arbeitsmaschinen ist es so möglich, dass das Steuergerät elektronische Signale der Last oder Lasten der Arbeitsmaschinen auswerten kann und das elektronische Steuersignal an nur einen zentralen Wandler, der mit der Hydromaschine erfindungsgemäß verbunden ist, gesendet werden muss. Daher müssen dezentral - auf anderen Arbeitsmaschinen, die von der Hydropumpe versorgbar sind, keine Wandler vorgesehen sein. Gegenüber dem Stand der Technik ergibt sich bei mehreren Arbeitsmaschinen somit ein vorrichtungstechnischer Vorteil mit einer geringeren Anzahl von Wandlern.

In einer Weiterbildung sind der Wandler und die Hydromaschine entweder diesseits oder jenseits der Schnittstelle verbindbar oder verbunden.

Eine besonders kompakte Anordnung und kurze und starre hydraulische Signalleitungen ermöglicht eine Weiterbildung, bei der der Wandler und die Hydropumpe fest, insbesondere gehäusefest, verbindbar oder verbunden sind.

Der Wandler bietet die Möglichkeit, das elektronische Steuersignal wieder in ein hydraulisches Steuersignal zurückzuwandeln. Auf diese Weise ist die elektronisch erfasste Last mit Vorteil vom Steuergerät elektronisch verarbeitbar und kann beispielsweise beliebig elektronisch modifiziert werden. Das ausgegebene elektronische Steuersignal wird vom Wandler wieder in ein hydraulisches Steuersignal gewandelt und kann im Anschluss wieder einem, insbesondere herkömmlichen, hydraulischen Regler, insbesondere einem Pumpenregler der Hydropumpe, bereitgestellt werden. Bestehende Einheiten aus Hydropumpe und hydraulisch angesteuertem Pumpenregler müssen somit trotz elektronischer Lasterfassung und -verarbeitung nicht umgerüstet werden. Auch können auf diese Weise nach der Rückwandlung in das hydraulische Steuersignal sonstige hydraulische Steuersignale, insbesondere Lastdrücke, zur Pumpenregelung mit berücksichtigt werden.

Vorzugsweise ist ein Maß für die Last ein Lastdruck. Das elektronische Steuersignal ist dann vom Steuergerät vorzugsweise proportional zur Summe aus dem Lastdruck und einem Differenzdruck ermittelbar. Alternativ oder ergänzend kann das Maß eine hydraulische Leistung, also ein Produkt aus Lastdruck und Druckmittelvolumenstrom sein. Auch andere Maße sind denkbar, wie beispielsweise ein am Verbraucher abgegriffenes Drehmoment, oder dergleichen.

Vorzugsweise ist diejenige der Arbeitsmaschinen, auf der die Hydropumpe anordenbar oder angeordnet ist, als Zugmaschine mit einer elektrischen oder einer als Verbrennungskraftmaschine ausgebildeten Antriebmaschine ausgestaltet, wohingegen die andere oder anderen als gezogene Arbeitsmaschine(n) ausgestaltet ist oder sind.

In einer Weiterbildung hat die Steueranordnung wenigstens ein Mittel zur elektronischen Erfassung einer Last der Verbraucher, insbesondere eine Druckerfassungseinheit. Diese sind mit dem Steuergerät signalverbindbar oder -verbunden. Auf diese Weise kann die Last des oder der Verbraucher, insbesondere eine höchste der Lasten, an das Steuergerät zur Weiterverarbeitung gemeldet werden

In einer Weiterbildung sind das Mittel und das Steuergerät derart verbindbar oder verbunden, dass sie auf derselben Arbeitsmaschine wie die Hydropumpe anordenbar sind. Dadurch kann diejenige Arbeitsmaschine, auf der die Hydropumpe anordenbar ist, mit beliebigen Arbeitsmaschinen - meist sind dies gezogene Arbeitsmaschinen - gekoppelt werden. Dabei müssen letztgenannte nicht auf die elektronische Erfassung der Last umgerüstet sein, sondern auch bestehende Arbeitsmaschinen mit rein hydraulischer Erfassung und Weiterleitung der Last oder des Lastdrucks sind problemlos koppelbar.

In einer Weiterbildung ist der Wandler (56) in oder an einem Druckmittelströmungspfad der Steueranordnung angeordnet, der mit einem insbesondere konstant oder quasikonstant regelbaren oder geregelten Druckmittelvolumenstrom eines Signaldruckmittels beaufschlagbar oder beaufschlagt ist. Auf diese Weise ist eine hohe Qualität des hydraulischen Steuersignals in Abhängigkeit des elektronischen Steuersignals möglich.

Zu diesem Zweck ist in einer Weiterbildung der Steueranordnung im Druckmittelströmungspfad, insbesondere stromaufwärts des Wandlers, eine Düse oder Drossel angeordnet, über die ein Druckmittelvolumenstrom im Druckmittelströmungspfad auf vorrichtungstechnisch einfache Weise einstellbar ist.

Um einen Druckmittelvolumenstrom im Druckmittelströmungspfad präzise regeln zu können, ist im Druckmittelströmungspfad, insbesondere stromaufwärts des Wandlers, ein Druckmittelvolumenstromregler angeordnet.

Um die Güte des hydraulischen Steuersignals weiter zu erhöhen, ist in einer Weiterbildung ein Druckraum des Wandlers, an dem das hydraulische Steuersignal ansteht oder ausgegeben wird, mit einer Druckmittelsenke gedrosselt verbindbar oder verbunden ist. So können Schwingungen des hydraulischen Steuersignals gedämpft werden.

In einer Weiterbildung ist der Wandler als ein Druckreduzierventil, ein Druckregelventil oder ein Druckbegrenzungsventil ausgestaltet. Das Ventil ist dabei von dem elektronischen Steuersignal des Steuergerätes ansteuerbar, insbesondere angesteuert, und stellt oder regelt den Druck eines Signaldruckmittels ein. Als vorrichtungstechnisch besonders einfach und günstig erweist sich dabei die Variante mit Druckbegrenzungsventil als Wandler.

Das Signaldruckmittel wird in einer Weiterbildung bevorzugt so bereitgestellt, dass ein hydraulischer Eingang des Wandlers oder des Ventils mit einer Druckmittelquelle der Steueranordnung fluidisch gedrosselt verbindbar insbesondere verbunden ist. Besonders einfach ist die Anordnung aufgebaut, wenn die Druckmittelquelle ein Hochdruckraum der Hydropumpe ist, und somit das Signaldruckmittel zur Regelung der Hydropumpe von ihr selbst bereitstellbar ist.

In einer Weiterbildung ist ein hydraulischer Ausgang des Wandlers oder des Ventils, an dem das hydraulische Steuersignal oder der hydraulische Steuerdruck ansteht, mit einer Druckmittelsenke gedrosselt verbindbar oder verbunden. So entsteht ein Leckölstrom, der eine gute Regelung des hydraulischen Steuersignals oder hydraulischen Steuerdrucks ermöglicht.

Um insbesondere diesen Leckölstrom konstant zu halten und so eine hohe Regelgüte des hydraulischen Steuersignals, insbesondere des hydraulischen Steuerdrucks, zu gewährleisten, weist die Anordnung in einer Weiterbildung in einem Druckmittelströmungspfad von einer Signaldruckmittelquelle zum Wandler einen Druckmittelvolumenstromregler auf.

In einer Weiterbildung hat die Anordnung einen Pumpenregler, über den in Abhängigkeit des elektronischen Steuersignals eine Regelgröße der Hydropumpe, insbesondere ein Druck, insbesondere der Differenzdruck, und / oder ein Fördervolumenstrom, regelbar ist oder sind.

Dabei kann der Pumpenregler so ausgestaltet sein, dass er vom elektronischen oder vom hydraulischen Steuersignal oder von beiden Arten von Steuersignal ansteuerbar ist.

Zur Priorisierung und / oder zum Auswählen eines von mehreren Steuersignalen, mit welchem dann der Pumpenregler schlussendlich ansteuerbar ist, weist die Anordnung in einer Weiterbildung eine Signalauswahleinrichtung auf, an deren Eingängen das elektronische Steuersignal oder ein davon abhängiges Steuersignal - insbesondere das gewandelte hydraulische Steuersignal - und ein sonstiges Steuersignal anstehen.

In einer Weiterbildung ist die Signalauswahleinrichtung hydraulisch und hat hydraulische Eingänge. An diesen stehen beispielsweise das gewandelte hydraulische Steuersignal und das sonstige (hydraulische) Steuersignal an. Besonders einfach ist sie als Druckauswahlventil oder Wechselventil ausgestaltet und wählt einen höchsten der an den Eingängen anstehende Drücke oder Lastdrücke als Steuersignal aus.

Insbesondere ist dies vorteilhaft, wenn das sonstige Steuersignal das eines prioritären, insbesondere sicherheitsrelevanten Verbrauchers, beispielsweise einer Lenkung oder Bremse, ist. Die Last oder der Lastdruck dieses besonders relevanten Verbrauchers muss somit nicht erst in ein elektronisches Signal gewandelt werden und kann direkt hydraulisch in die Regelkette eingespeist werden, was einen Sicherheitsgewinn darstellt. Ist das sonstige (hydraulische) Steuersignal größer als das aus dem elektronischen Steuersignal gewandelte hydraulische Steuersignal, so kann von einem konventionellen LS-Modus oder -Betrieb gesprochen werden, bei dem ein hydraulisches Lastdrucksignal direkt - also nicht elektronisch gewandelt - verarbeitet wird.

In einer Weiterbildung ist oder sind der Pumpenregler und / oder die Signalauswahleinrichtung und / oder der Volumenstromregler und / oder der Wandler in einem Steuerblock oder einer Steuerscheibe zusammengefasst. Alternativ oder ergänzend können der Wandler und der Volumenstromregler im Pumpenregler integriert oder zusammengefasst sein.

In einer Weiterbildung hat die Anordnung pro Verbraucher einen oder mehrere Erfassungseinheiten, insbesondere Druckerfassungseinheiten, zur Erfassung der Last, insbesondere des jeweiligen Lastdrucks, der Verbraucher der Arbeitsmaschinen. Die Erfassungseinheiten sind dabei mit dem Steuergerät mittels Leitungen oder leitungslos signalverbunden.

In einer Weiterbildung können die Druckerfassungseinheiten als kombinierte Druck- und Temperaturerfassungseinheiten oder -sensoren ausgestaltet sein.

In einer Weiterbildung sind diese mit einer SENT-Schnittstelle ausgeführt, wodurch ein Verkabelungsaufwand der Erfassungseinheiten minimiert ist und andererseits die Möglichkeit bietet, das elektronische Steuersignal oder davon abhängige Ansteuerkennlinien temperaturabhängig auszuführen. Dadurch kann die Leistung und die Genauigkeit der Steuerung und / oder Regelung mittels der Steueranordnung, insbesondere mittels dem Steuergerät, weiter erhöht werden.

In dieser Weiterbildung kann das Steuergerät derart ausgestaltet sein, dass eine Leistung der Hydropumpe in Abhängigkeit einer oder mehrerer im Steuergerät abgelegter Temperaturgrenzen begrenzbar ist.

In einer Weiterbildung können die Druckerfassungseinheiten, die den hydraulischen Druck des jeweiligen Verbrauchers in ein an das Steuergerät meldbares Lastdrucksignal wandeln, an den Arbeitsmaschinen verteilt anordenbar oder angeordnet sein. In diesem Fall erfolgt die Wandlung somit nahe am jeweiligen Verbraucher, insbesondere am jeweiligen Ventilsteuerblock der Arbeitsmaschinen. Die Meldung an das Steuergerät kann beispielsweise über eine elektronische Schnittstelle zwischen den Arbeitsmaschinen, beispielsweise über einen ISO-Bus, erfolgen.

Alternativ sind alle Druckerfassungseinheiten oder zumindest deren überwiegende Anzahl, die den hydraulischen Druck des jeweiligen Verbrauchers in ein an das Steuergerät meldbares Lastdrucksignal wandeln, an derjenigen Arbeitsmaschine anordenbar oder angeordnet, an der die Hydropumpe und / oder das Steuergerät anordenbar oder angeordnet ist. In diesem Fall erfolgt die Wandlung des hydraulischen Lastdrucks ins elektronische Lastdrucksignal somit nahe dem Steuergerät.

In einer Weiterbildung ist das Steuergerät derart ausgestaltet, dass darüber das elektronische Steuersignal in Abhängigkeit einer Betriebssituation, insbesondere in Abhängigkeit der Betriebssituation eines oder mehrerer Verbraucher, ermittelbar, insbesondere ausgebbar ist.

Hierzu kann das Steuergerät eine oder mehrere Ausgestaltungen alternativ zueinander oder einander ergänzend aufweisen. Diese sind: Eine Ausgestaltung des Steuergerätes derart, dass darüber das elektronische Steuersignal mit fester Differenz zur höchsten Last der Verbraucher (insbesondere des höchsten Lastdrucks) ermittelbar ist, und / oder eine Ausgestaltung derart, dass darüber das elektronische Steuersignal konstant haltbar ist, und / oder eine Ausgestaltung derart, dass darüber das elektronische Steuersignal begrenzbar, insbesondere konstant oder variabel begrenzbar, ist.

Alternativ oder ergänzend ist das Steuergerät derart ausgestaltet, dass darüber das elektronische Steuersignal mit variabler Differenz zur höchsten Last der Verbraucher, insbesondere in Abhängigkeit eines Druckmittelvolumenstroms und / oder einer Leitungslänge und / oder eines Druckverlustes des betreffenden Verbrauchers, ermittelbar ist. Entspricht das elektronische Steuersignal der Summe aus höchstem Lastdruck und aufaddiertem Differenzdruck, so kann der Differenzdruckanteil - wie bereits erwähnt - im Steuergerät als konstant abgelegt sein.

Alternativ kann er als Funktion des Druckmittelvolumenstroms des den höchsten Lastdruck stellenden Verbrauchers oder der Arbeitsmaschine dieses Verbrauchers im Steuergerät variabel abgelegt sein.

Der variabel abgelegte Differenzdruck weist vorzugsweise einen konstanten Anteil von (in der Regel) 8 - 10 bar auf, der als von der Individualdruckwaage des Verbrauchers eingeregelte, konstante Druckdifferenz an der Zumessblende des Verbrauchers benötigt wird. Hinzu kommt ein variabler Anteil, der sich - wie bereits erwähnt - aus Druckmittelvolumenstromabhängigen Leistungsverlusten ergibt.

Ein Druckmittelvolumenstrom der Hydropumpe ist über das Steuergerät vorzugsweise aus einer erfassten Drehzahl der Hydropumpe und deren, insbesondere über eine Schwenkwinkelerfassungseinheit, erfassten Fördervolumen ermittelbar.

Ein Druckmittelvolumenstrom eines jeweiligen Verbrauchers ist vom Steuergerät vorzugsweise aus einem jeweiligen Ansteuersignal einer dem Verbraucher zugeordneten Zumessblende ermittelbar.

Ein Druckmittelvolumenstrom einer Arbeitsmaschine, die über die Schnittstelle (Power Beyond) mit der die Hydropumpe aufweisenden Arbeitsmaschine koppelbar ist, ist über das Steuergerät vorzugsweise mittels einer Druckmittelvolumenstrombilanz ermittelbar, in die der zuvor ermittelte Druckmittelvolumenstrom der Hydropumpe und - davon abgezogen - der Druckmittelvolumenstrom aller Verbraucher diesseits der Schnittstelle eingehen.

Nach einem, wobei das Steuergerät derart ausgestaltet ist, dass darüber Lastspitzen und / oder -schwingungen ermittelbar und das elektronische Steuersignal in Abhängigkeit davon derart ermittelbar ist, dass die Lastspitzen und / oder -schwingungen darin zumindest teilweise kompensierbar sind. Die Ansteuerung der Hydropumpe erfolgt dann stabiler, beispielsweise im Sinne einer automatischen Schwingungsreduzierung.

In einer Weiterbildung können die elektronischen Lastdrucksignale einzelner Verbraucher mittels einem aktiven Bedienelement (Human Machine Interface), beispielsweise einem Joystick mit Kraftrückmeldung (force feedback) an den Bediener gemeldet werden. Somit kann dieser die Last "spüren".

Eine erfindungsgemäße Anordnung hat wenigstens zwei hydraulisch koppelbare Arbeitsmaschinen mit wenigstens einem hydraulischen Verbraucher und mit einer hydraulischen Steueranordnung, die gemäß wenigstens einem Aspekt der vorhergehenden Beschreibung ausgestaltet ist. Dabei sind die Arbeitsmaschinen hydraulisch über die Schnittstelle (Power Beyond) gekoppelt und der wenigstens eine Verbraucher ist über vom Steuergerät wie oben beschrieben angesteuerte Hydromaschine bedarfsgerecht mit Druckmittel versorgbar.

Vorzugsweise ist die Hydropumpe auf derjenigen der Arbeitsmaschinen angeordnet, die als Zugmaschine ausgebildet ist und vorzugsweise eine Antriebsmaschine aufweist.

Zwei Ausführungsbeispiele einer erfindungsgemäßen Anordnung mobiler Arbeitsmaschinen sind in den Zeichnungen dargestellt. Anhand der Figuren dieser Zeichnungen wird die Erfindung nun näher erläutert.

Es zeigen:
Figur 1 einen hydraulischen Schaltplan einer Anordnung mobiler Arbeitsmaschinen gemäß einem ersten Ausführungsbeispiel,
Figur 2 einen hydraulischen Schaltplan einer Anordnung mobiler Arbeitsmaschinen gemäß einem zweiten Ausführungsbeispiel, und
Figur 3 ein Diagramm des Differenzdruckes einer Hydropumpe der Anordnung in Abhängigkeit des Druckmittelvolumenstroms, gültig für beide Ausführungsbeispiele.

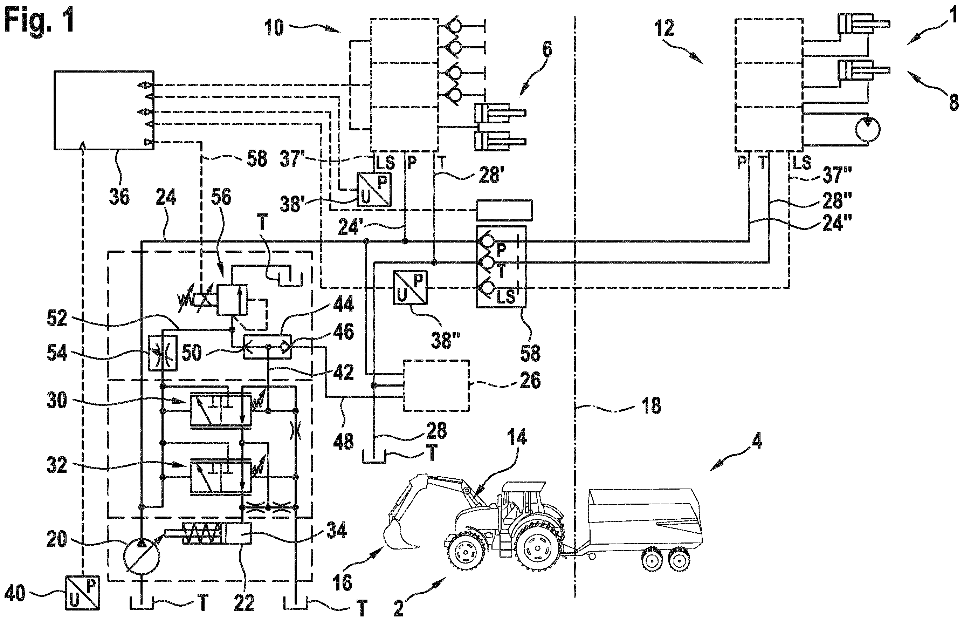

Gemäß Figur 1 hat ein erstes Ausführungsbeispiel einer Anordnung mobiler Arbeitsmaschinen 1 eine als Zugmaschine ausgebildete mobile Arbeitsmaschine 2, beispielsweise einen Traktor, und eine damit über eine als "Power Beyond" bezeichnete Schnittstelle 58 hydraulisch gekoppelte zweite mobile Arbeitsmaschine 4. Diese ist als Erntewagen ausgestaltet. Beide Arbeitsmaschinen 2, 4 weisen eine Vielzahl hydraulischer Verbraucher 6, 8 auf. Die Verbraucher 6 bzw. 8 sind für die jeweilige Arbeitsmaschine 2 bzw. 4 über einen Ventilsteuerblock 10 bzw. 12, der jeweils eine Vielzahl von Steuerventilen aufweist, mit Druckmittel versorgbar. Jedem der Verbraucher ist dabei wenigstens ein Steuerventil zur lastdruckunabhängigen Druckmittelversorgung zugeordnet. Diese lastdruckunabhängige Versorgung ist in bekannter Weise mittels einer Kombination aus Zumessblende und Individualdruckwaage (beide nicht dargestellt) für jeden der Verbraucher 6 bzw. 8 sichergestellt. Ein typischer Verbraucher der Zugmaschine 2 ist beispielsweise ein Hub- oder Hydrozylinder 14, über den eine Schaufel 16 hubfähig ist. Eine Systemgrenze zwischen den Arbeitsmaschinen 2, 4 kann in den Figuren über die strichpunktierte Linie 18 symbolisiert werden.

Die Anordnung mobiler Arbeitsmaschinen 1 hat für die Druckmittelversorgung der Verbraucher 6, 8 eine in ihrem Verdrängungsvolumen verstellbare Hydropumpe 20. Die Hydropumpe 20 ist beispielsweise als Axialkolbenmaschine in Schrägachsen- oder Schrägscheibenbauweise ausgestaltet. Zur Verstellung des Verdrängungsvolumens hat die Hydropumpe 20 eine Verstelleinrichtung in Form eines Hydrozylinders 22. Dieser lenkt in bekannter Weise ein Stellelement der Hydropumpe 20, von dem deren Fördervolumen abhängt, an. Im Falle der Ausbildung als Schrägscheibenmaschine ist dies beispielsweise eine schwenkbare Schrägscheibe (nicht dargestellt).

Die Hydromaschine 20 ist im gezeigten Ausführungsbeispiel im offenen hydraulischen Kreislauf betrieben und hat einen Sauganschluss, der mit einem Tank T in Druckmittelverbindung ist. Sie hat einen Druckanschluss, an den eine Arbeitsleitung 24 angeschlossen ist. Mit der Arbeitsleitung 24 fluidisch verbunden sind die Ventilsteuerblöcke 10, 12 und eine Lenkung 26. Des Weiteren hat die Anordnung 1 eine Rücklaufleitung 28, die mit dem Tank T verbunden ist. Auch die Rücklaufleitung 28 ist wiederum mit den Ventilsteuerblöcken 10, 12 und mit der Lenkung 26 verbunden. Über die Arbeitsleitung 24 fördert die Hydropumpe 20 Druckmittel über die Steuerventile der Ventilsteuerblöcke 10, 12 bedarfsgerecht zu den Verbrauchern 6, 8, und zur Lenkung 26, wobei ein Druckmittelvolumenrücklaufstrom über die Rücklaufleitung 28 zum Tank T abgeführt wird.

Zur bedarfsgerechten Bereitstellung des Druckmittels, das heißt insbesondere zur Bereitstellung eines Pumpendruckes in der Arbeitsleitung 24, der ausreichend hoch über dem höchsten Lastdruck der Verbraucher liegt, weist die Hydropumpe 20 einen als Druckregler ausgestalteten Pumpenregler 30 auf. Dieser ermöglicht im Zusammenspiel mit vom Bediener verstellbaren Zumessblenden der Verbraucher 6, 8 und den Zumessblenden zugeordneten Individualdruckwaagen eine Regelung des Förderstroms der Hydropumpe 20 und wird daher häufig auch als Förderstromregler 30 bezeichnet.

Der Pumpenregler 30 ist in den gezeigten Ausführungsbeispielen als proportional betätigbares 3/2-Wegeventil ausgestaltet.

Zur Druckabschneidung, das heißt zur geregelten Druckbegrenzung des Pumpendrucks, hat die Hydropumpe 20 einen Druckregler 32, der in den gezeigten Ausführungsbeispielen als proportional betätigbares 3/2-Wegeventil ausgestaltet ist. Dabei sind der Förderstromregler 30 und der Druckregler 32 in einem Ventilblock zusammengefasst.

Bezüglich einer Druckmittelverbindung eines Druckraumes 34 des Hydrozylinders 22 mit der Arbeitsleitung 24, was zum "Zurückschwenken" oder zur Verkleinerung des Fördervolumens der Hydropumpe 20 führt, und einer Druckmittelverbindung des Druckraumes 34 mit dem Tank T, was zum "Ausschwenken" oder zur Vergrößerung des Fördervolumens der Hydropumpe 20 führt, ist der Druckregler 32 dem Förderstromregler 30 nachgeschaltet, und hat somit immer die höhere Priorität der beiden Ventile 30, 32. Im Normalbetrieb unterhalb eines "Abschneidedrucks" regelt der Förderstromregler 30 den Druck in der Arbeitsleitung 24, während der auch als Druckabschneideventil bezeichnete Druckregler 32 permanent in seiner Öffnungsstellung steht, in der der Druckraum 34 mit dem Tank T verbindbar ist. Lediglich beim Überschreiten des Pumpendrucks über den am Druckregler 32 voreingestellten Wert des "Abschneidedrucks" schließt der Druckregler 32 die Druckmittelverbindung des Druckraumes 34 zum Tank T ab, und öffnet die Druckmittelverbindung zur Arbeitsleitung 24, wodurch Druckmittel mit hohem Druck in den Druckraum 34 gelangt und die Hydropumpe 20 zurückschwenkt. Diese Form der Druckregelung über den Förderstromregler 30 und der Druckabschneidung über den Druckregler 32 ist als solche aus dem Stand der Technik bekannt und wird daher an dieser Stelle nicht weiter beschrieben.

Zur bedarfsgerechten oder -orientierten Druckmittelversorgung gehört, dass die Anordnung mobiler Arbeitsmaschinen 1 mit einem Load-Sensing-System für die hydraulischen Verbraucher 6, 8 ausgerüstet ist. Bei einem solchen System ist der höchste Lastdruck der verschiedenen Verbraucher 6, 8 über eine hydraulische Wechselventilkette oder Wechselventilkaskade (nicht dargestellt und in den einzelnen Ventilsteuerblöcken 10, 12 enthalten) zur Hydropumpe 20 gemeldet. Diese Meldung erfolgt dabei nicht unmittelbar an die Hydropumpe 20 sondern über ein elektronisches Steuergerät 36. Hierzu ist am Ventilsteuerblock 10 bzw. 12 eine Lastmeldeleitung 37' bzw. 37" mit einer elektronischen Druckerfassungseinheit 38' bzw. 38" verbunden, die wiederum mit dem Steuergerät 36 signalverbunden ist. Das Steuergerät 36 ist weiterhin signalverbunden mit einer Schwenkwinkelerfassungseinheit 40, über die der Schwenkwinkel der Hydropumpe 20 erfassbar ist.

Kernelement der Regelung des Pumpendruckes in der Arbeitsleitung 24 ist, wie bereits erwähnt, der Förderstromregler 30. Über ihn ist zum einen die Arbeitsleitung 24 und zum anderen der Tank T mit dem Druckraum 34 fluidisch verbindbar. An einem Ventilkörper des Förderstromreglers 30 greift in Richtung der Verbindung der Arbeitsleitung 24 mit dem Druckraum 34 der Druck in der Arbeitsleitung 24 an. In entgegengesetzter Richtung, der Verbindung des Tanks T mit dem Druckraum 34, greifen eine einstellbare Feder und ein in einer Lastmeldeleitung 42 anstehendes, hydraulisches Steuersignal an.

Die Lastmeldeleitung 42 ist mit einem Ausgang eines Druckauswahl- oder Wechselventils 44 verbunden. Dieses hat zwei Eingänge 46, 50, von denen ein erster 46 mit einer Lastmeldeleitung 48 mit der Lenkung 26 druckmittelverbunden ist. Ein zweiter 50 der Eingänge 46, 50 ist mit einer Druckleitung 52 verbunden, die wiederum über einen Druckmittelvolumenstromregler 54 mit der Arbeitsleitung 24 verbunden ist. An der Druckleitung 52 ist ein Druckbegrenzungsventil 56 angeschlossen. Über letztgenanntes ist die Druckleitung 52 mit dem Tank T druckmittelverbindbar, wenn der Schließdruck des Druckbegrenzungsventils 56 in der Druckleitung 52 überschritten wird. Das Druckbegrenzungsventil 56 ist über einen Elektromagneten und über eine Signalleitung 58 in seinem Schließdruck über das Steuergerät 36 einstellbar.

Im Betrieb der Anordnung 1 weist jeder der Verbraucher 6, 8 einen Lastdruck in Abhängigkeit seiner Belastung oder Last auf. Über die Wechselventilkaskaden der Ventilsteuerblöcke 10, 12 wird an diesen der jeweils höchste Lastdruck ermittelt und hydraulisch über die Signalleitung 37' bzw. 37"abgegriffen. Über die Druckerfassungseinheiten 38' und 38" werden diese hydraulischen Lastdrucksignale jeweils in ein elektronisches gewandelt und an das Steuergerät 36 gemeldet. Hier erfolgen dann eine Auswahl des höchsten der elektronischen Lastdrucksignale und eine Addition eines konstanten oder eines von den Betriebsbedingungen abhängigen, variablen Differenzdrucks Δp. Es ergeht über die Signalleitung 58 ein entsprechendes elektronisches Steuersignal an den Elektromagneten des Druckbegrenzungsventils 56. Dieses begrenzt den Druck in der Druckleitung 52, wobei in diese von der Arbeitsleitung 24 über den Volumenstromregler 54 ein permanenter Druckmittelvolumenstrom abgezweigt wird. Auf diese Weise kann der als Druckbegrenzungsventil 56 ausgebildete Wandler das elektronische Steuersignal des Steuergerätes in ein hydraulisches (zurück)wandeln. Dieses Signal steht als Druck in der Druckleitung 52 am zweiten Eingang 50 des Wechselventils 44 an. Am ersten Eingang 46 steht als sonstiges hydraulisches Steuersignal der Lastdruck der Lenkung 26 an. Der höhere der beiden Drücke wird an die Lastmeldeleitung 42, und damit an dem Pumpenregler 30, ausgegeben. Dieser regelt im Prinzip den Differenzdruck ein, mit dem der Pumpendruck in der Arbeitsleitung 24 oberhalb des in der Lastmeldeleitung 42 gemeldeten Druckes ansteht.

Das Druckbegrenzungsventil 56 ist in baulicher Einheit mit der Hydropumpe 20 und den Ventilen 30, 32 zusammengefasst. Er ist somit seitens der Zugmaschine 2, diesseits der Power Beyond Schnittstelle 58 angeordnet.

Das elektronische Steuersignal kann beispielsweise so ermittelt werden, dass sich die Regelung über die Hydropumpe 20 stabil gegenüber Lastdruckschwingungen erweist.

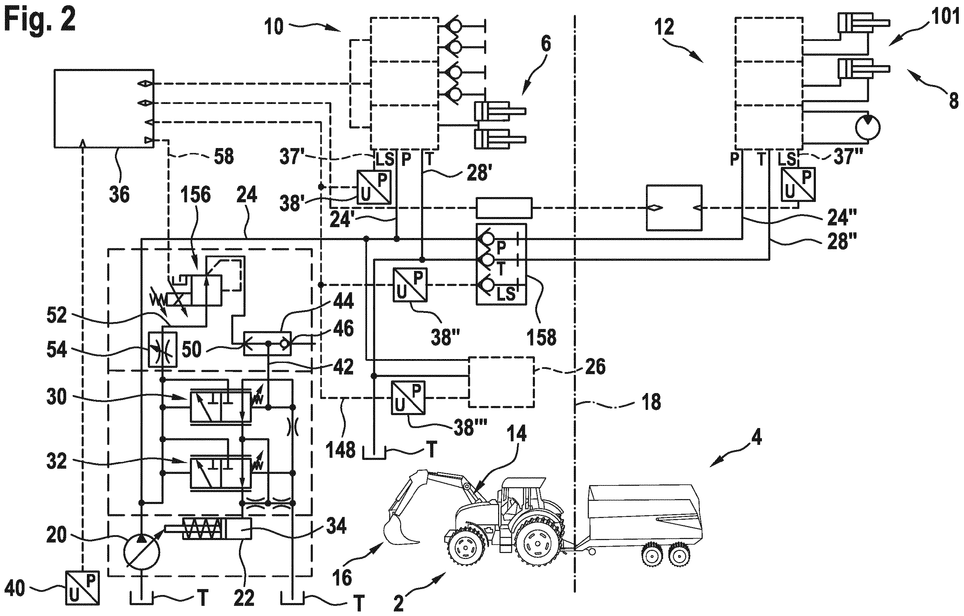

Figur 2 zeigt ein zweites Ausführungsbeispiel einer Anordnung mobiler Arbeitsmaschinen 101, die weitgehend derjenigen gemäß Figur 1 entspricht. Komponenten, die gegenüber dem ersten Ausführungsbeispiel unverändert sind, weisen daher unveränderte Bezugszeichen auf. In folgenden Punkten unterscheidet sich die Anordnung mobiler Arbeitsmaschinen 101 jedoch vom ersten Ausführungsbeispiel: Zum einen ist ein Wandler 156 vorgesehen, der anstatt als Druckbegrenzungsventil als Druckregelventil ausgestaltet ist. Somit wird der Wandler 156 vom Druckmittelvolumenstrom des Druckmittelvolumenstromreglers 54 durchströmt. Dem gegenüber ist die Lösung mit Druckbegrenzungsventil gemäß Figur 1 vorrichtungstechnisch weniger aufwendig. Ein weiterer Unterschied ist, dass die Lastmeldung der Verbraucher des Ventilsteuerblocks 12 der zweiten Arbeitsmaschine 4 nicht über die Power Beyond-Schnittstelle 158, sondern über eine elektronische Schnittstelle mittels eines ISO-Bus gemeldet wird. Hierzu ist die Druckerfassungseinheit 38" nicht mit dem LS-Anschluss der Power Beyond-Schnittstelle 158, sondern mit einem separaten Steuergerät und dieses wiederum mit dem ISO-Bus verbunden. Letztgenannter meldet das elektronische Lastdrucksignal des Steuerblocks 12 zur bereits beschriebenen Weiterverarbeitung an das Steuergerät 36.

Im Ausführungsbeispiel gemäß Figur 2 ist weiterhin der Lastdruck der Lenkung 26 nicht hydraulisch, sondern durch eine elektronische Druckerfassungseinheit 38"' erfasst und weitergemeldet. Die Weitermeldung erfolgt über eine elektronische Signalleitung 148 hin zum Steuergerät 36. Entsprechend erfolgt die Priorisierung der von den Druckerfassungseinheiten 38', 38" und 38"' gemeldeten Lastdrücke im Steuergerät 36, also elektronisch. Demzufolge ist auch der erste Eingang 46 des Wechselventils 44 geschlossen oder "blind".

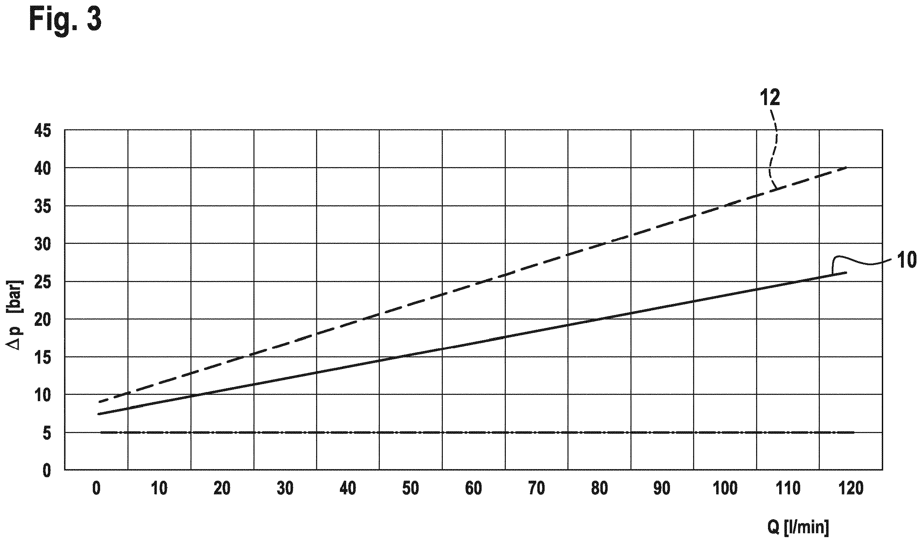

Figur 3 zeigt ein Diagramm mit der Darstellung des Wertes des elektronischen Signals Δp, welches vom Steuergerät 36 an den Wandler 56; 156 gesendet wird, und dessen Abhängigkeit vom Druckmittelvolumenstrom Q der Hydropumpe 20. Dargestellt sind drei Kurven. Eine untere bei etwa konstant 5 bar, die den Mindestdifferenzdruck darstellt, der von der Hydropumpe 20 oberhalb des höchsten Lastdrucks bereitgestellt werden muss, um den Druckverlust am Ventilsteuerblock 10 bzw. 12 überwinden zu können. Dieser Mindestdifferenzdruck ist maßgeblich durch den über die jeweilige Zumessblende konstant zu haltenden Druckabfall festgelegt, der von den jeweiligen Individualdruckwaagen eingeregelt wird. Er beträgt in der Regel 8 bis 10 bar, ist in Figur 3 jedoch auf 5 bar festgelegt. Die beiden oberen Kurven stellen jeweils variabel Anteile für den Druckverlust der Verbraucher 6 der Zugmaschine 2 und der Verbraucher 8 der Arbeitsmaschine 4 jenseits der Power-Beyond-Schnittstelle 58; 158 dar. Zu erkennen ist, dass mit steigendem Druckmittelvolumenstrom Q deren Werte stetig zunehmen. Dies ist damit zu erklären, dass mit größerem Druckmittelvolumenstrom Q auch Leistungsverluste und damit Druckverluste in den Leitungen zu den Verbrauchern 6, 8 zunehmen. Entsprechend höher muss das am Druckregler 30 zu regelnde Δp eingestellt werden. Die in Figur 3 dargestellte Kennlinie ist im Steuergerät 36 zur Ermittlung des elektronischen Steuersignals Δp in Abhängigkeit der Druckmittelvolumenströme der Verbraucher 6, 8 abgelegt.

Offenbart ist eine Steueranordnung für hydraulisch gekoppelte Arbeitsmaschinen mit einer lastabhängig geregelten Hydropumpe, wobei ein hydraulisches Lastsignal eines Verbrauchers der Arbeitsmaschinen mittels einer Lasterfassungseinheit in ein elektronisches Lastsignal wandelbar und von einem elektronischen Steuergerät der Steueranordnung in ein elektronisches Steuersignal modifizierbar ist, in Abhängigkeit dessen die Hydropumpe ansteuerbar ist. Ein elektrohydraulischer Wandler der Steueranordnung, der dieses elektronische Steuersignal in ein hydraulisches zurückwandeln kann, ist dabei derart mit der Hydropumpe verbunden, dass beide zur Anordnung auf nur einer der Arbeitsmaschinen vorgesehen sind.

Offenbart ist weiterhin eine Anordnung mobiler Arbeitsmaschinen mit einer derartigen Steueranordnung.

## Patentansprüche

1. Hydraulische Steueranordnung für eine Anordnung hydraulisch koppelbarer, mobiler Arbeitsmaschinen (2, 4), mit einer Schnittstelle (58; 158) zur hydraulischen Kopplung der Arbeitsmaschinen (2, 4), und mit einer Hydromaschine (20) zur bedarfsgerechten Druckmittelversorgung wenigstens eines hydraulischen Verbrauchers (6, 8) der Arbeitsmaschinen (2, 4), wobei ein elektronisches Steuergerät (36) vorgesehen ist, über das in Abhängigkeit einer Last des Verbrauchers (6, 8) ein elektronisches Steuersignal erzeugbar ist, welches von einem Wandler (56; 156) der Steueranordnung in ein hydraulisches Steuersignal wandelbar ist, in Abhängigkeit dessen die Hydromaschine (20) ansteuerbar ist, **dadurch gekennzeichnet, dass** der Wandler (56; 156) und die Hydromaschine (20) entweder diesseits oder jenseits der Schnittstelle (58; 158) verbunden sind, und dass sie auf derselben Arbeitsmaschine (2) anordenbar sind.

2. Steueranordnung nach Anspruch 1, wobei der Wandler (56; 156) und die Hydropumpe (20) fest, insbesondere gehäusefest, verbindbar oder verbunden sind.

3. Steueranordnung nach einem der vorhergehenden Ansprüche, wobei der Wandler (56; 156) über das Steuergerät (36) mit dem elektronischen Steuersignal ansteuerbar oder angesteuert ist.

4. Steueranordnung nach einem der vorhergehenden Ansprüche, wobei der Wandler (56; 156) in oder an einem Druckmittelströmungspfad (52) angeordnet ist, der mit einem regelbaren Druckmittelvolumenstrom eines Signaldruckmittels beaufschlagbar oder beaufschlagt ist.

5. Steueranordnung nach Anspruch 4, wobei im Druckmittelströmungspfad (52), insbesondere stromaufwärts des Wandlers (56; 156), eine Düse oder Blende oder ein Druckmittelvolumenstromregler (54) angeordnet ist.

6. Steueranordnung nach einem der vorhergehenden Ansprüche, wobei der Wandler (56; 156) ein Druckreduzierventil, ein Druckregelventil (156) oder ein Druckbegrenzungsventil (56) ist oder hat.

7. Steueranordnung nach einem der vorhergehenden Ansprüche mit einem Pumpenregler (30), über den in Abhängigkeit des hydraulischen Steuersignals eine Regelgröße der Hydromaschine (20) regelbar ist.

8. Steueranordnung nach einem der vorhergehenden Ansprüche mit einer Signalauswahleinrichtung (44), an deren Eingängen (46, 50) das hydraulische Steuersignal und ein sonstiges, hydraulisches Steuersignal anstehen, und über die eins der Signale auswählbar ist und ein Förderstromregler (30) mit dem ausgewählten Signal beaufschlagbar ist.

9. Steueranordnung nach Anspruch 8, wobei das sonstige Steuersignal das eines prioritären, insbesondere sicherheitsrelevanten Verbrauchers (26), beispielsweise einer Lenkung oder Bremse, ist.

10. Steueranordnung zumindest nach einem der Ansprüche 1, 5, 7 oder 8, wobei der Wandler (56; 156) und / oder der Druckmittelvolumenstromregler (54) und / oder der Förderstromregler (30) und / oder die Signalauswahleinrichtung (44) in einem Steuerblock oder einer Steuerscheibe oder in einer Steuerblock- oder Steuerscheibenanordnung zusammengefasst sind.

11. Steueranordnung nach einem der vorhergehenden Ansprüche, wobei das Steuergerät (36) derart ausgestaltet ist, dass darüber das elektronische Steuersignal mit fester Differenz zur höchsten Last der Verbraucher (6, 8) ermittelbar ist, und / oder wobei das Steuergerät (36) derart ausgestaltet ist, dass darüber das elektronische Steuersignal mit variabler Differenz zur höchsten Last der Verbraucher (6, 8) ermittelbar ist, und / oder wobei das Steuergerät (36) derart ausgestaltet ist, dass darüber das elektronische Steuersignal konstant haltbar ist, und / oder wobei das Steuergerät (36) derart ausgestaltet ist, dass darüber das elektronische Steuersignal begrenzbar ist.

12. Steueranordnung nach einem der vorhergehenden Ansprüche, wobei das Steuergerät (36) derart ausgestaltet ist, dass darüber Lastschwingungen ermittelbar sind, und dass das elektronische Steuersignal derart ermittelbar ist, dass diese Lastschwingungen zumindest teilweise kompensierbar sind.

13. Anordnung hydraulisch koppelbarer Arbeitsmaschinen (2, 4), mit einer hydraulischen Steueranordnung (1; 101), die gemäß wenigstens einem der vorhergehenden Ansprüche ausgestaltet ist, wobei die Arbeitsmaschinen (2, 4) hydraulisch über die Schnittstelle (58; 158) gekoppelt sind und der wenigstens eine Verbraucher (6, 8) über die Hydromaschine (20) bedarfsgerecht mit Druckmittel versorgbar ist.

14. Anordnung nach Anspruch 13, wobei dieselbe Arbeitsmaschine eine Zugmaschine (2) mit einer Antriebsmaschine ist.

## Claims

1. Hydraulic control arrangement for an arrangement of hydraulically couplable mobile machines (2, 4), having an interface (58; 158) for the hydraulic coupling of the machines (2, 4), and having a hydraulic machine (20) for supplying pressure medium to at least one hydraulic consumer (6, 8) of the machines (2, 4) in accordance with requirements, wherein an electronic control device (36) is provided, by means of which it is possible, in accordance with a load of the consumer (6, 8), to generate an electronic control signal, which can be converted by a transducer (56; 156) of the control arrangement into a hydraulic control signal, in accordance with which the hydraulic machine (20) can be operated, **characterized in that** the transducer (56; 156) and the hydraulic machine (20) are connected either on the near side or the far side of the interface (58; 158), and **in that** they can be arranged on the same machine (2).

2. Control arrangement according to Claim 1, wherein the transducer (56; 156) and the hydraulic pump (20) can be connected or are connected in a fixed manner, in particular in a manner fixed in relation to a housing.

3. Control arrangement according to either of the preceding claims, wherein the transducer (56; 156) can be operated or is operated by means of the control device (36), using the electronic control signal.

4. Control arrangement according to any one of the preceding claims, wherein the transducer (56; 156) is arranged in or on a pressure medium flow path (52), which can be supplied or is supplied with a controllable pressure medium volume flow of a signal pressure medium.

5. Control arrangement according to Claim 4, wherein a nozzle or orifice plate or a pressure medium volume flow controller (54) is arranged in the pressure medium flow path (52), in particular upstream of the transducer (56; 156).

6. Control arrangement according to any one of the preceding claims, wherein the transducer (56; 156) is or has a pressure-reducing valve, a pressure control valve (156) or a pressure-limiting valve (56).

7. Control arrangement according to any one of the preceding claims, having a pump controller (30), by means of which a controlled variable of the hydraulic machine (20) can be controlled in accordance with the hydraulic control signal.

8. Control arrangement according to any one of the preceding claims, having a signal selection device (44), to the inputs (46, 50) of which the hydraulic control signal and some other hydraulic control signal are applied and by means of which one of the signals can be selected and a delivery flow controller (30) can be supplied with the selected signal.

9. Control arrangement according to Claim 8, wherein the other control signal is that of a high-priority consumer (26), in particular a safety-relevant consumer, e.g. a steering system or brake.

10. Control arrangement at least according to any one of Claims 1, 5, 7 and 8, wherein the transducer (56; 156) and/or the pressure medium volume flow controller (54) and/or the delivery flow controller (30) and/or the signal selection device (44) are or is combined in a control block or a control disk or in a control block or control disk arrangement.

11. Control arrangement according to any one of the preceding claims, wherein the control device (36) is configured in such a way that it is possible, by means of said device, to determine the electronic control signal with a fixed difference with respect to the highest load of the consumers (6, 8), and/or wherein the control device (36) is configured in such a way that, by means of said device, the electronic control signal can be determined with a variable difference with respect to the highest load of the consumers (6, 8), and/or wherein the control device (36) is configured in such a way that, by means of said device, the electronic control signal can be held constant, and/or wherein the control device (36) is configured in such a way that, by means of said device, the electronic control signal can be limited.

12. Control arrangement according to any one of the preceding claims, wherein the control device (36) is configured in such a way that load oscillations can be detected by said device and that the electronic control signal can be detected in such a way that said load oscillations can be at least partially compensated.

13. Arrangement of hydraulically couplable machines (2, 4), having a hydraulic control arrangement (1; 101) which is configured in accordance with at least one of the preceding claims, wherein the machines (2, 4) are hydraulically coupled via the interface (58; 158), and the at least one consumer (6, 8) can be supplied with pressure medium by means of the hydraulic machine (20) in accordance with requirements.

14. Arrangement according to Claim 13, wherein the same machine is a towing machine (2) having a driving machine.

## Revendications

1. Ensemble de commande hydraulique destiné à un ensemble de machines de travail mobiles (2, 4) pouvant être accouplées hydrauliquement, ledit ensemble de commande comprenant une interface (58 ; 158) destinée à l'accouplement hydraulique des machines de travail (2, 4) et une machine hydraulique (20) destinée à l'alimentation d'au moins un consommateur (6, 8) des machines de travail (2, 4) en agent hydraulique sous pression en fonction des besoins, une unité de commande électronique (36) étant prévue qui génère, en fonction d'une charge du consommateur (6, 8), un signal de commande électronique qui peut être converti par un convertisseur (56 ; 156) de l'ensemble de commande en un signal de commande hydraulique en fonction duquel la machine hydraulique (20) peut être commandée, **caractérisé en ce que** le convertisseur (56 ; 156) et la machine hydraulique (20) sont reliés d'un côté ou de l'autre de l'interface (58 ; 158), et **en ce qu'**ils peuvent être disposés sur la même machine de travail (2) .

2. Ensemble de commande selon la revendication 1, le convertisseur (56 ; 156) et la pompe hydraulique (20) sont reliés ou peuvent être reliés solidairement, notamment solidairement au boîtier.

3. Ensemble de commande selon l'une des revendications précédentes, le convertisseur (56 ; 156) étant ou pouvant être commandé à l'aide du signal de commande électronique par le biais de l'ensemble de commande (36).

4. Ensemble de commande selon l'une des revendications précédentes, le convertisseur (56 ; 156) étant disposé dans ou sur un trajet d'écoulement d'agent sous pression (52) qui est soumis ou peut être soumis à un débit volumique d'agent sous pression régulable d'un agent sous pression de signal.

5. Ensemble de commande selon la revendication 4, une buse ou un diaphragme ou un régulateur de débit volumique d'agent sous pression (54) est disposé dans le trajet d'écoulement d'agent sous pression (52), notamment en amont du convertisseur (56 ; 156).

6. Ensemble de commande selon l'une des revendications précédentes, le convertisseur (56 ; 156) étant ou comportant une soupape de réduction de pression, une soupape de régulation de pression (156) ou une soupape de limitation de pression (56).

7. Ensemble de commande selon l'une des revendications précédentes comprenant un régulateur de pompe (30) permettant de réguler une grandeur de régulation de la machine hydraulique (20) en fonction du signal de commande hydraulique.

8. Ensemble de commande selon l'une des revendications précédentes comprenant un dispositif de sélection de signal (44), aux entrées (46, 50) duquel sont présents le signal de commande hydraulique et un autre signal de commande hydraulique, et qui permet de sélectionner l'un des signaux et d'appliquer le signal sélectionné à un régulateur de débit (30).

9. Ensemble de commande selon la revendication 8, l'autre signal de commande étant celui d'un consommateur prioritaire (26), notamment en termes de sécurité, par exemple une direction ou un frein.

10. Ensemble de commande selon l'une au moins des revendications 1, 5, 7 ou 8, le convertisseur (56 ; 156) et/ou le régulateur de débit volumique d'agent sous pression (54) et/ou le régulateur de débit (30) et/ou le dispositif de sélection de signal (44) étant rassemblés dans un bloc de commande ou un disque de commande ou dans un ensemble de blocs de commande ou de disques de commande.

11. Ensemble de commande selon l'une des revendications précédentes, l'unité de commande (36) étant conçue de manière à déterminer le signal de commande électronique avec une différence fixe par rapport à la charge la plus élevée des consommateurs (6, 8), et/ou l'unité de commande (36) étant conçue de manière à déterminer le signal de commande électronique avec une différence variable par rapport à la charge la plus élevée des consommateurs (6, 8), et/ou l'unité de commande (36) étant conçue de manière à maintenir constant le signal de commande électronique, et/ou l'unité de commande (36) étant conçue de manière à limiter le signal de commande électronique.

12. Ensemble de commande selon l'une des revendications précédentes, l'unité de commande (36) étant conçue de manière à déterminer des oscillations de charge, et à déterminer le signal de commande électronique de manière à compenser au moins partiellement ces oscillations de charge.

13. Ensemble de machines de travail (2, 4) pouvant être accouplées hydrauliquement, ledit ensemble comprenant un ensemble de commande hydraulique (1 ; 101) qui est conçu selon l'une au moins des revendications précédentes, les machines de travail (2, 4) étant accouplées hydrauliquement par le biais de l'interface (58 ; 158) et l'au moins un consommateur (6, 8) pouvant être alimenté en agent sous pression en fonction des besoins par le biais de la machine hydraulique (20).

14. Ensemble selon la revendication 13, la même machine de travail étant un tracteur (2) comprenant une machine d'entraînement.
